# EUROPÄISCHE PATENTSCHRIFT

(11) **EP 2 487 067 B1**
(45) Veröffentlichungstag und Bekanntmachung des Hinweises auf die Patenterteilung: **05.09.2018**
(21) Anmeldenummer: 12152377.3
(22) Anmeldetag: 25.01.2012
(51) Int. Cl.: B60P 1/44, B66F 9/12, B66F 9/06, B62D 53/00

(54) **Trailerzuganhänger und Trailerzugsystem**
Industrial trailer and road train formed thereof
Chariot industriel et train formé par de tels chariots

(30) Priorität: 14.02.2011 DE 102011011137; 25.07.2011 DE 102011108500
(43) Veröffentlichungstag der Anmeldung: 15.08.2012
(73) Patentinhaber: LR Intralogistik GmbH, 84109 Wörth a. d. Isar (DE)
(72) Erfinder: Klünder, Matthias, 22946 Brunsbek (DE); Domke, Frank, 58579 Schalksmühle (DE)
(74) Vertreter: Patentship Patentanwaltsgesellschaft mbH

(56) Entgegenhaltungen:
- EP-A1- 0 477 154
- DE-A1- 19 614 623
- DE-A1- 19 958 086
- DE-U- 1 846 583
- FR-A1- 2 631 948
- US-A- 3 223 434
- US-A- 3 805 981
- US-A- 3 817 577

## Beschreibung

Die Erfindung betrifft einen Trailerzuganhänger für den innerbetrieblichen Warentransport, wobei der Trailerzuganhänger einen rollengeführten Tragrahmen mit einem vorderen und hinteren Fahrwerk aufweist, der aus einem seitlichen Längsträger, einem vorderen Querträger und einem hinteren Querträger besteht, wobei der Tragrahmen auf einer dem Längsträger gegenüberliegenden Seite eine Ladeöffnung aufweist und der Trailerzuganhänger mit mindestens einer mittels einer Hubeinrichtung anhebbar und absenkbar angeordneten, aus mehreren in Fahrzeugquerrichtung verlaufenden Gabelzinken gebildeten Lastgabel versehen ist.

Der innerbetriebliche Warentransport und Materialfluss, insbesondere die Materialversorgung von Produktionslinien in Produktionsbetrieben, erfolgt zunehmend mit Trailerzugsystem, die von einem Schlepper und einem oder mehreren an den Schlepper angehängten Trailerzuganhängern gebildet werden, auf denen die zu transportierenden Waren, insbesondere mittels Ladungsträgern, beispielsweise Paletten oder Gitterboxen, innerhalb des Produktionsbetriebes transportiert werden.

Zum Ziehen eines oder mehrerer dieser Trailerzuganhänger werden als Schlepper ausgebildete Lagertechnikflurförderzeuge verwendet, die mit einer entsprechenden Anhängevorrichtung vorgesehen sind, an die ein oder mehrere Trailerzuganhänger angehängt werden können. Derartige Schlepper weisen kompakte Abmessungen auf, durch die Transportanhänger innerhalb eines Produktionsbetriebes auf beengten Transportwegen sicher transportiert werden können.

In intralogistischen Prozessen nimmt ein derartiger Horizontaltransport unter der Verwendung von derartigen Trailerzugsystemen, die aus einem Schlepper und einem oder mehreren angehängten Trailerzuganhänger gebildet sind, an Bedeutung zu.

Aus der EP 2 226 240 A1 ist ein gattungsgemäßer C-förmiger Trailerzuganhänger bekannt. Der Trailerzuganhänger ist auf einen Handbetrieb des Wechsels des Ladungsträgers ausgerichtet, bei dem eine Bedienperson in einer abgesenkten Stellung der Lastgabel einen Ladungsträger, beispielsweise eine mit Lenkrollen versehene Gitterbox, über die seitliche Ladeöffnung des Trailerzuganhängers herausziehen bzw. hineinschieben kann.

Zunehmend ist ein automatischer Betrieb eines Trailerzuganhängers gefordert, der einen fahrerlosen Betrieb des Trailerzugsystems ermöglicht. Aus der DE 199 58 086 A1 ist ein Trailerzuganhänger bekannt, der einen automatischen Betrieb ermöglicht. Zum seitlichen Ausschub der Ladung ist eine mit einer Lastgabel versehene Teleskophub- und Dreheinrichtung vorgesehen, um die Ladung über die seitliche Ladeöffnung aufnehmen bzw. absetzen zu können. Eine derartige Teleskophub- und Dreheinrichtung, um die Lastgabel seitlich zu verschieben sowie anheben bzw. absenken zu können, weist jedoch einen hohen Bauaufwand auf und führt an dem Trailerzuganhänger zu einer aufwändigen Konstruktion mit einer dachartigen Brücke, an dem die Teleskophub- und Dreheinrichtung verschiebbar angeordnet ist.

Aus der DE 196 14 623 A1 ist eine als Teleskopgabelzinke ausgebildete Gabelzinke als Vorsatzgerät für als Gabelhubwagen oder Gabelstapler ausgebildete Flurförderzeuge bekannt.

Der vorliegenden Erfindung liegt die Aufgabe zugrunde, einen Trailerzuganhänger der eingangs genannten Gattung zur Verfügung zu stellen, der für ein automatisierbares seitliches Ausschieben und Einziehen eines auf der Lastgabel angeordneten Ladungsträgers über die seitliche Ladeöffnung einen geringen Bauaufwand aufweist.

Diese Aufgabe wird erfindungsgemäß dadurch gelöst, dass die Gabelzinken der Lastgabel jeweils als Teleskopgabeln ausgebildet sind, die als Teleskopgabelzinken ausgebildet sind und aus einem Trägerabschnitt und einen an dem Trägerabschnitt längsverschiebbaren Lastaufnahmeabschnitt bestehen, wobei die Teleskopgabeln mit den längsverschiebbaren Lastaufnahmeabschnitten ein seitliches Aufnehmen und Absetzen eines Ladungsträgers in Fahrzeugquerrichtung über die Ladeöffnung ermöglichen. Der erfindungsgemäße Gedanke besteht somit darin, zum Ausschieben bzw. Einziehen eines Ladungsträgers die Gabelzinken der Lastgabel als von Teleskopgabelzinken ausgebildeten Teleskopgabeln auszuführen, um einen Ladungsträger über die seitliche Ladeöffnung aufnehmen und absetzen zu können. Derartige Teleskopgabeln weisen einen geringen Bauaufwand auf und ermöglichen einen einfachen konstruktiven Aufbau des Trailerzuganhängers, da die Aus- und Einschubbewegung des Ladungsträgers direkt an den Gabelzinken der Lastgabel ohne seitliches Verschieben der Hubeinrichtung erzielt wird.

Der erfindungsgemäße Trailerzuganhänger kann mit einer an den Fahrwerken angeordneten Hubeinrichtung zum Anheben und Absenken des Tragrahmens mit den daran angeordneten, von den Teleskopgabeln gebildeten Lastgabeln versehen sein.

Gemäß einer bevorzugten Ausführungsform der Erfindung umfasst die Hubeinrichtung mindestens ein an dem Längsträger angeordnetes Hubwerk zum Anheben und Absenken der von den Gabelzinken gebildeten Lastgabel. Mit einem derartigen Hubwerk, beispielsweise einem Hubgerüst, in dem die von den Teleskopgabelzinken gebildete Lastgabel höhenverstellbar geführt ist, kann ein Anheben und Absenken der Lastgabel mit geringem Bauaufwand erzielt werden. Sofern der erfindungsgemäße Trailerzuganhänger mit mehreren Lastgabeln versehen ist, kann durch eigene Hubwerke für jede Lastgabel zudem auf einfache Weise ein unabhängiger Betrieb der jeweiligen Lastgabel erzielt werden.

Bevorzugt ist der erfindungsgemäße Trailerzuganhänger gemäß einer vorteilhaften Ausführungsform der Erfindung mit zwei an dem Längsträger angeordneten Hubwerken versehen, mittels denen jeweils eine aus zwei Gabelzinken bestehende Lastgabel anhebbar und absenkbar ist. Der Trailerzuganhänger weist somit zwei unabhängig voneinander betreibbare Lastgabel für zwei Ladungsträger auf, wodurch auf einfache Weise an einem Bereitstellungsplatz mit dem Trailerzuganhänger in einem Aufnahmespiel ein leerer Ladungsträger aufgenommen und in einem Absetzspiel ein voller Ladungsträger abgesetzt werden kann.

Die Teleskopgabeln einer Lastgabel bestehen gemäß einer vorteilhaften Ausführungsform der Erfindung jeweils aus einem Trägerabschnitt, der an einem in dem Hubwerk vertikal bewegbaren Führungsschlitten angeordnet ist, und einem Lastaufnahmeabschnitt, der an dem Trägerabschnitt längsverschiebbar angeordnet ist. Aus einem feststehenden Trägerabschnitt und einem an dem Trägerabschnitt längsverschiebbaren Lastaufnahmeabschnitt bestehende Teleskopgabeln weisen einen geringen Herstellaufwand auf und ermöglichen mit geringem Bauaufwand ein Ausschieben bzw. Einziehen eines Ladungsträgers über die seitliche Ladeöffnung des Trailerzuganhängers. Der mit den feststehenden Trägerabschnitten der Teleskopgabeln versehene Führungsschlitten kann weiterhin auf einfache Weise und mit geringem Bauaufwand mit einem hubgerüstartigen Hubwerk angehoben und abgesenkt werden. Der erfindungsgemäße Trailerzuganhänger weist somit mit den hubgerüstartigen Hubwerken für die vertikale Hubbewegung der Ladungsträger und mit den als Teleskopgabelzinken ausgebildeten Gabelzinken einer Lastgabel für die seitliche Ausschubbewegung der Ladungsträger einen geringen Bauaufwand auf.

Bevorzugt ist zum Ausschieben und Einziehen der Teleskopgabeln die Gabelzinke mit einer Schubeinrichtung vorgesehen, so dass ein kraftbetriebener Ausschub bzw. Einzug der Trägerabschnitte der Teleskopgabeln erzielt werden kann.

Besondere Vorteile ergeben sich bei einer von zwei Gabelzinken gebildeten Lastgabel, wenn die Schubeinrichtung gemäß einer Ausgestaltungsform der Erfindung einen gleichzeitigen Betrieb beider Teleskopgabeln einer Lastgabel ermöglicht. Dadurch kann ein synchrones Ausfahren bzw. Einfahren der Lastaufnahmeabschnitte der beiden Teleskopgabeln einer Lastgabel beim Aufnehmen bzw. Absetzen eines Ladungsträgers auf einfache Weise erzielt werden.

Mit besonderem Vorteil ist der Trailerzuganhänger als vollautomatischer, autonomer Trailerzuganhänger ausgebildet, der einen vollautomatischen Betrieb der Hubeinrichtung und der Schubeinrichtung der Teleskopgabeln mit einem automatischen Absetzen eines Ladungsträgers an einem Bereitstellungsplatz bzw. mit einem automatischen Aufnehmen eines Ladungsträgers an dem Bereitstellungsplatz aufweist. Der erfindungsgemäße Trailerzuganhänger ermöglicht durch den konstruktiv einfachen Aufbau mit den Hubwerken zum Anheben/Absenken der Lastgabel und den als Teleskopgabeln ausgebildete Gabelzinken der Lastgabel zum Ausfahren/Einziehen eines Ladungsträger über die seitliche Ladeöffnung mit geringem konstruktiven Bauaufwand einen vollautomatischen, autonomen Betrieb, bei dem ohne eine Bedienperson in einem Aufnahmespiel ein leerer Ladungsträger von einem Bereitstellungsplatz aufgenommen sowie in einem Absetzspiel ein voller Ladungsträger an dem Bereitstellungsplatz abgesetzt werden kann. Mit dem erfindungsgemäßen Trailerzuganhänger ist somit ein autonomer, vollautomatischer innerbetrieblicher Warentransport und Materialfluss und eine Materialversorgung von Produktionslinien in Produktionsbetrieben geringem Bauaufwand erzielbar.

Bevorzugt weist hierbei der Trailerzuganhänger eine Sensoreinrichtung zum Erfassen einer angehobenen Transportstellung und einer abgesenkten Übergabestellung der Lastgabel auf. Die Stellung der Lastgabel, insbesondere deren angehobene Endstellung, die eine Transportstellung bildet, und deren abgesenkte Endstellung, die eine Übergabestellung in einem Aufnahme- bzw. Absetzspiel bildet, kann somit für einen vollautomatischen Betrieb auf einfache Weise erfasst werden.

Zweckmäßigerweise ist der Trailerzuganhänger mit einer Sensoreinrichtung zum Erfassen einer eingezogen Transportstellung der Teleskopgabel und einer ausgefahrenen Übergabestellung der Teleskopgabel versehen. Die eingefahrene Endstellung der Teleskopgabeln, die eine Transportstellung bildet, und die ausgefahrene Endstellung der Teleskopgabeln, die eine Übergabestellung in einem Aufnahme- bzw. Absetzspiel bildet, kann somit für einen vollautomatischen Betrieb auf einfache Weise erfasst werden.

Mit besonderem Vorteil ist der erfindungsgemäße Trailerzuganhänger mit einem Lasterkennungssensor zum Erfassen eines auf der Lastgabel befindlichen Ladungsträgers versehen. Mit einem Lasterkennungssensor, beispielsweise einer an einer Teleskopgabel einer Lastgabel angeordneten Lastklappe, kann für einen vollautomatischen Betrieb auf einfache Weise die Aufnahme bzw. das Absetzen eines Ladungsträgers an einem Bereitstellungsplatz sowie das Vorhandensein oder Nichtvorhandensein eines Ladungsträgers für die Einleitung eines Aufnahmespiels oder Absetzspiels erfasst werden.

Bevorzugt ist die Teleskopgabel an der Gabelspitze mit einer Sensoreinrichtung als Kollisionserkennung versehen. Für den vollautomatischen Betrieb kann mit einer derartigen Sensoreinrichtung beim Ausfahren der Trägerabschnitte der Teleskopgabeln ein Hindernis auf einfache Weise erkannt werden, um den vollautomatischen Betrieb abzusichern.

Gemäß einer bevorzugten Weiterbildung der Erfindung ist der Trailerzuganhänger mit einer Sensoreinrichtung zum Erkennen eines an einem Bereitstellungsplatz befindlichen Ladungsträgers versehen. Beim Anfahren eines Bereitstellungsplatzes kann mit einer derartigen Sensoreinrichtung einem Zugschlepper des Trailerzuganhängers eine Positionierhilfe zum exakten Positionieren des Trailerzuganhängers mit der entsprechenden Lastgabel neben dem Bereitstellungsplatz gegeben werden.

Sofern der Trailerzuganhänger mit einer Sensoreinrichtung zur Überwachung der seitlichen Ladeöffnung versehen ist, kann auf einfache Weise im Fahrbetrieb oder bei einer Aufnahme bzw. einem Absetzen eines Ladungsträgers eine Überwachung der seitlichen Ladeöffnung ermöglicht werden.

Die Hubeinrichtung und/oder die Schubeinrichtung können als elektrische oder pneumatische Antriebe ausgebildet sein. Gemäß einer bevorzugten Ausführungsform der Erfindung sind die Hubeinrichtung und/oder die Schubeinrichtung als hydraulische Antriebe ausgebildet, die mittels eines an dem Trailerzuganhänger angeordneten elektrisch betriebenen Hydraulikpumpenaggregats versorgbar sind. Insbesondere bei einem erfindungsgemäßen Trailerzuganhänger, der mit zwei Hubwerken und zwei von jeweils zwei Teleskopgabeln gebildeten Lastgabeln versehen ist, kann durch hydraulische Antriebe der Bauaufwand weiter verringert werden, da lediglich ein elektrisch betriebenes Hydraulikpumpenaggregat zur Versorgung der Antriebe an dem Trailerzuganhänger vorgesehen werden muss.

Bevorzugt ist der Trailerzuganhänger mit einer elektronischen Steuereinrichtung versehen, die mit den Sensoreinrichtungen sowie der Hubeinrichtung und der Schubeinrichtung in Wirkverbindung steht. Mit einer derartigen elektronischen Steuereinrichtung kann der vollautomatische Betrieb des erfindungsgemäßen Trailerzuganhängers auf einfache Weise erzielt und gesteuert werden.

Gemäß einer bevorzugten Weiterbildung der Erfindung ist der auf einen vollautomatischen Betrieb ausgelegte Trailerzuganhänger mit einem Betriebsartenwahlschalter für den vollautomatischen Betrieb, für einen halbautomatischen Betrieb und/oder für einen manuellen Betrieb der Hubeinrichtung sowie der Schubeinrichtung versehen. Hierdurch wird es auf einfache Weise ermöglicht, dass eine Bedienperson einen halbautomatischen Betrieb oder einen manuellen Betrieb durchführen kann. In einem halbautomatischen Betrieb kann durch Betätigen entsprechenden Bedienelemente auf einfache Weise von einer Bedienperson an einem Bereitstellungsplatz ein Aufnahmespiel durchgeführt wird, in dem ein leerer Ladungsträger von einem Bereitstellungsplatz an dem Bereitstellungsplatz aufgenommen wird, oder ein Absetzspiel durchgeführt werden, in dem ein voller Ladungsträger abgesetzt wird. In dem halbautomatischen Betrieb werden hierbei nach Betätigen eines einzigen entsprechenden Bedienelements zum Durchführen eines Aufnahmespiels bzw. eines Absetzspiels die Hubbewegungen bzw. die Ausschub- und Einzugbewegungen der Teleskopgabeln von dem Trailerzuganhänger selbstständig ausgeführt. In einem manuellen Betrieb kann von einer Bedienperson durch Betätigen entsprechender Bedienelemente, beispielsweise in einem Tippbetrieb, die Hubeinrichtung sowie die Schubeinrichtung angesteuert werden, um die entsprechenden Bewegungen zum Aufnehmen eines Ladungsträgers von einem Bereitstellungsplatz oder Absetzen eines Ladungsträgers an einem Bereitstellungsplatz durch manuelle Eingaben zu erzielen.

Für den vollautomatischen Betrieb weist die elektronische Steuereinrichtung des erfindungsgemäßen Trailerzuganhängers bevorzugt eine Kommunikationsverbindung zu einem Zugschlepper auf. Bevorzugt ist die Kommunikationsverbindung bidirektional, so dass Zustandsmeldungen und Steuerbefehle zwischen dem Zugschlepper und dem Trailerzuganhänger in beiden Richtungen übertragen werden können. Eine derartige Kommunikationsverbindung ist bevorzugt von einem CAN-Bus mit einem entsprechenden Verbindungskabel zwischen Zugschlepper und Trailerzuganhänger gebildet.

Von dem Trailerzuganhänger kann über eine derartige Kommunikationsverbindung auf einfache Weise im vollautomatischen Betrieb während eines Absetzspiels oder eines Aufnahmespiels eine entsprechende Zustandsmeldung an den Zugschlepper ausgegeben werden, um den Betrieb, insbesondere den Fahrbetrieb, des Zugschleppers während eines Absetzspiels oder eines Aufnahmespiels nach Verlassen der Transportstellung der Lastgabel abzusperren.

Zudem kann über eine derartige Kommunikationsverbindung von dem Trailerzuganhänger nach Erreichen der Transportstellung mit eingezogenen Teleskopgabeln und angehobenem Hubwerk am Ende eines Absetzspiels oder eines Aufnahmespiels an den Zugschlepper eine entsprechende Zustandsmeldung ausgegeben werden, um den Fahrbetrieb des Zugschleppers wieder freizugeben.

Von dem Zugschlepper kann über eine derartige Kommunikationsverbindung auf einfache Weise nach Erreichen eines Bereitstellungsplatzes ein Steuerbefehl für ein Absetzspiel eines Ladungsträgers an einem Bereitstellungsplatz oder ein Steuerbefehl für ein Aufnahmespiel eines Ladungsträgers von einem Bereitstellungsplatz an den Trailerzuganhänger ausgegeben werden. Zudem kann über die Kommunikationsverbindung im Fahrbetrieb des Zugschleppers eine entsprechende Zustandsmeldung an den Trailerzuganhänger ausgegeben werden, um den Betrieb der Hubeinrichtung sowie der Schubeinrichtung zu sperren.

Über diese Kommunikationsverbindung können zudem auf einfache Weise die Positionierhilfssignale der an dem Trailerzuganhänger angeordneten Sensoreinrichtung, die einen an einem Bereitstellungsplatz befindlichen Ladungsträger erkennt, mit dem Zugschlepper ausgetauscht werden.

Die Energieversorgung des Trailerzuganhängers kann durch eine bordeigene Batterie erfolgen. Gemäß einer bevorzugten Ausgestaltungsform der Erfindung weist der Trailerzuganhänger eine elektrische Energieversorgungsverbindung zur Versorgung des elektrisch betriebenen Hydraulikpumpenaggregats und/oder der elektronischen Steuereinrichtung mit elektrischer Energie von einem Zugschlepper auf. Durch die Energieversorgung des Trailerzuganhängers durch den Zugschlepper kann der Bauaufwand für den Trailerzuganhänger weiter verringert werden.

Die Erfindung betrifft weiterhin ein Trailerzugsystem bestehend aus mindestens einem erfindungsgemäßen, vollautomatischen Trailerzuganhänger und einem vollautomatischen Zugschlepper. Mit einem vollautomatischen, autonomen Zugschlepper und einem oder mehreren erfindungsgemäßen, von dem Zugschlepper gezogenen vollautomatischen, autonomen Trailerzuganhänger kann mit geringem Bauaufwand ein fahrerloser, vollautomatischer innerbetrieblicher Warentransport und Materialfluss, insbesondere die Materialversorgung von Produktionslinien in Produktionsbetrieben, ermöglicht werden.

Bei einem derartigen Trailerzugsystem ist bevorzugt zur Energieversorgung des Trailerzuganhängers eine Energieversorgungsverbindung, insbesondere eine elektrische Energieversorgungsverbindung, zwischen dem Zugschlepper und dem Trailerzuganhänger ausgebildet. Die für den vollautomatischen Betrieb des Trailerzuganhängers während eines Absetzspiels oder eines Aufnahmespiels erforderliche Energie für die Bewegungen der Hubeinrichtung und der Schubeinrichtung können somit auf einfache Weise von dem Zugschlepper bereitgestellt werden.

Bei einem derartigen Trailerzugsystem ist bevorzugt eine Kommunikationsverbindung, insbesondere eine bidirektionale Kommunikationsverbindung, zwischen dem Zugschlepper und dem Trailerzuganhänger für den vollautomatischen Betrieb ausgebildet ist. Mit einer derartigen Kommunikationsverbindung können für den vollautomatischen Betrieb des Trailerzugsystems auf einfache Weise die oben beschriebenen Steuerbefehle und Zustandsmeldungen sowie Positionierhilfssignale zwischen Zugschlepper und Trailerzuganhänger ausgetauscht werden.

Die Erfindung betrifft weiterhin ein Verfahren zum Betrieb eines vollautomatischen Trailerzugsystem bestehend aus mindestens einem erfindungsgemäßen, vollautomatischen Trailerzuganhänger, der mit zwei Lastgabel für die Aufnahme von zwei Ladungsträgern versehen ist, und einem vollautomatischen Zugschlepper, wobei an dem Trailerzuganhänger die vordere Lastgabel nicht mit einem Ladungsträger beladen und die hintere Lastgabel mit einem Ladungsträger beladen ist. Zum Auswechseln eines an einem Bereitstellungsplatz befindlichen Ladungsträgers positioniert der Zugschlepper in einem ersten Schritt den Trailerzuganhänger mit der vorderen Lastgabel seitlich neben dem Bereitstellungsplatz und gibt in einem zweiten Schritt einen Steuerbefehl an den Trailerzuganhänger zum Durchführen eines Aufnahmespiels mit der vorderen Lastgabel. Nach Erreichen der Transportstellung der mit dem aufgenommenen Ladungsträger beladenen vorderen Lastgabel positioniert der Zugschlepper den Trailerzuganhänger in einem dritten Schritt mit der hinteren Lastgabel seitlich neben dem Bereitstellungsplatz und gibt in einem vierten Schritt einen Steuerbefehl an den Trailerzuganhänger zum Durchführen eines Absetzspiels mit der hinteren Lastgabel. Mit einem derartigen Verfahren kann mit einem erfindungsgemäßen Trailerzugsystem unter Verwendung eines erfindungsgemäßen Trailerzuganhängers mit einem vorderen und einem hinteren Ladungsplatz an einem Bereitstellungsplatz auf einfache Weise ein Ladungsträger gegen einen anderen Ladungsträger ausgewechselt werden und somit ein vollautomatisiertes Beladen und Entladen von Bereitstellungsplätzen mit Ladungsträgern ohne manuellen Eingriff durch eine Bedienperson erzielt werden.

Die Bereitstellungsplätze können hierbei auf Fahrbahnhöhe sein oder sich gegenüber der Fahrbahn auf einem erhöhten Niveau befinden.

Weitere Vorteile und Einzelheiten der Erfindung werden anhand der in den schematischen Figuren dargestellten Ausführungsbeispiele näher erläutert. Hierbei zeigt
- Figur 1: ein erfindungsgemäßes Trailerzugsystem mit einem Zugschlepper und einem erfindungsgemäßen Trailerzuganhänger in einer Draufsicht,
- Figur 2: eine Seitenansicht des erfindungsgemäßen Trailerzuganhängers gemäß Ansicht X der Figur 1,
- Figur 3: einen Schnitt entlang der Linie Y-Y der Figur 2,
- Figur 4: eine Hinteransicht des erfindungsgemäßen Trailerzuganhängers,
- Figur 5: eine perspektivische Darstellung eines erfindungsgemäßen Trailerzuganhängers,
- Figur 6: eine weitere perspektivische Darstellung des Trailerzuganhängers der Figur 5,
- Figur 7: eine weitere Ausführungsform eines erfindungsgemäßen Trailerzuganhängers in einer Draufsicht,
- Figur 8: den Trailerzuganhänger der Figur 7 in einer Seitenansicht gemäß Ansicht X der Figur 7
- Figur 9: den Trailerzuganhänger der Figuren 7, 8 in einer Ansicht von unten,
- Figur 10: eine perspektivische Darstellung des Trailerzuganhängers der Figuren 7 bis 9 und
- Figur 11: eine weitere perspektivische Darstellung des Trailerzuganhängers der Figuren 7 bis 9.

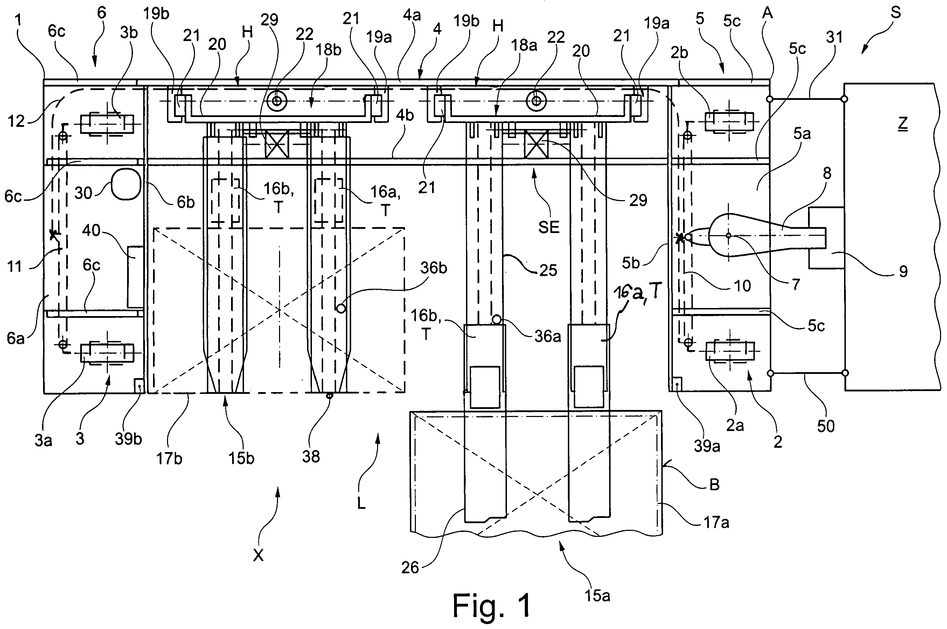

In der Figur 1 ist ein Trailerzugsystem S bestehend aus einem Zugschlepper Z und einem oder mehreren angehängten erfindungsgemäßen Trailerzuganhängern A gezeigt. Bevorzugt ist das Trailerzugsystem S von einem autonomen, vollautomatischen Zugschlepper Z und mindestens einem autonomen, vollautomatischen Trailerzuganhängern A gebildet.

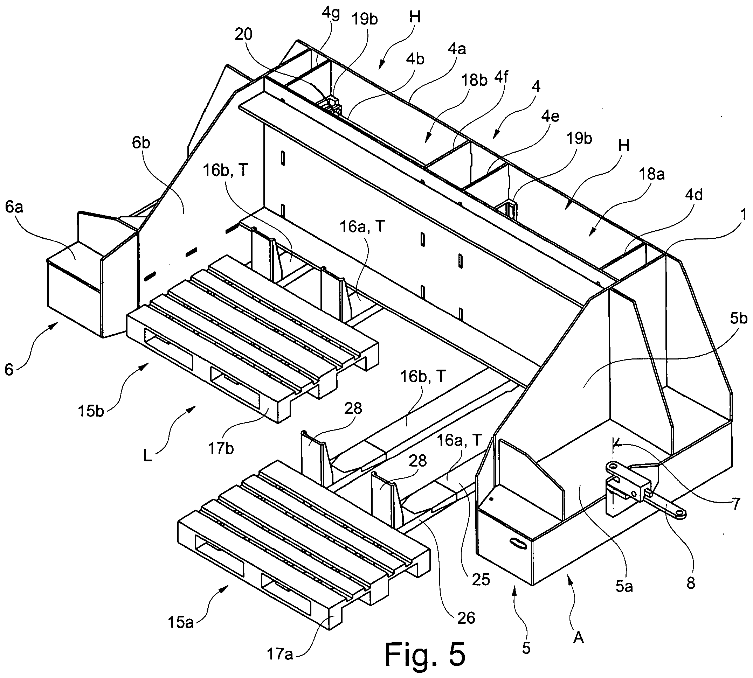

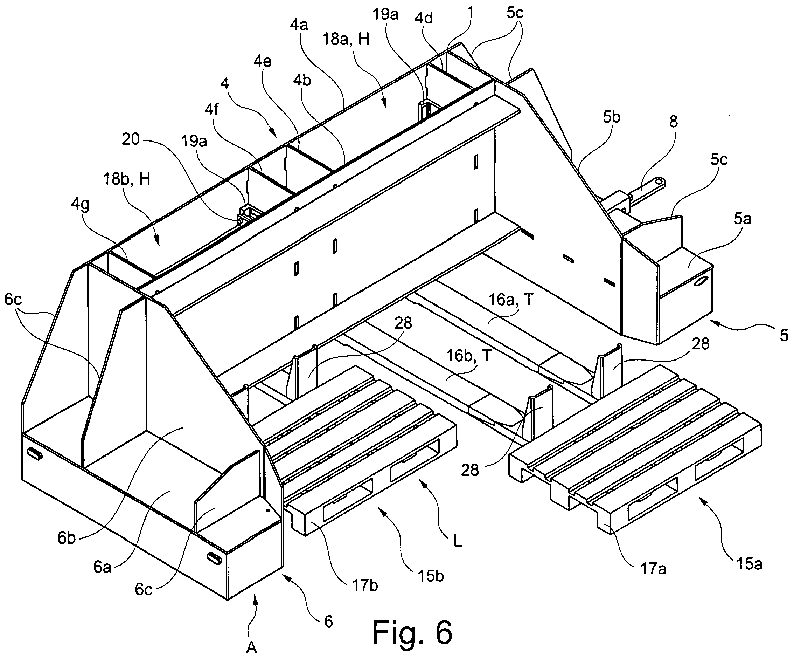

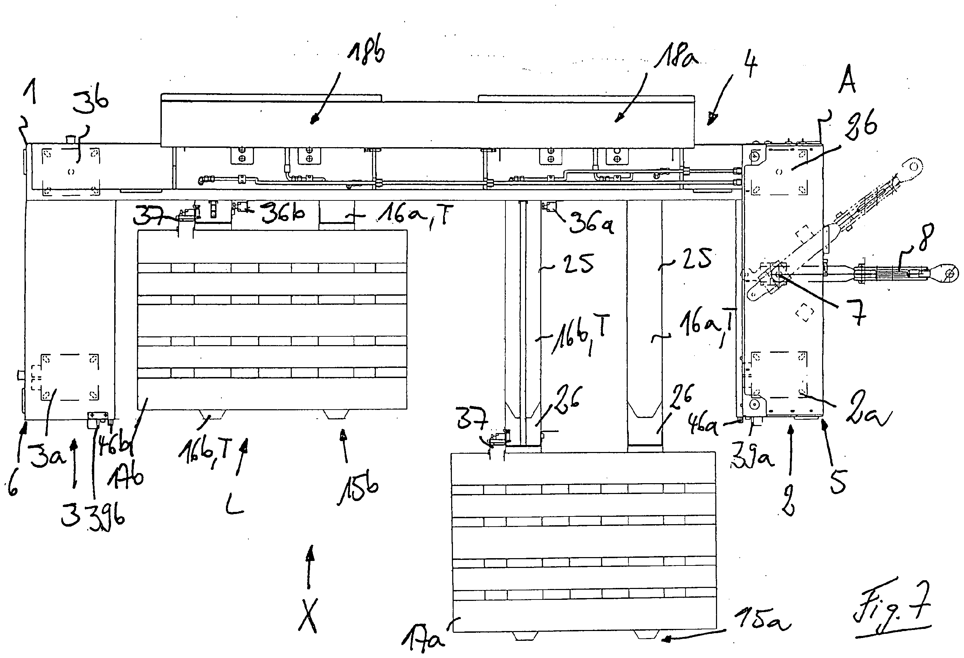

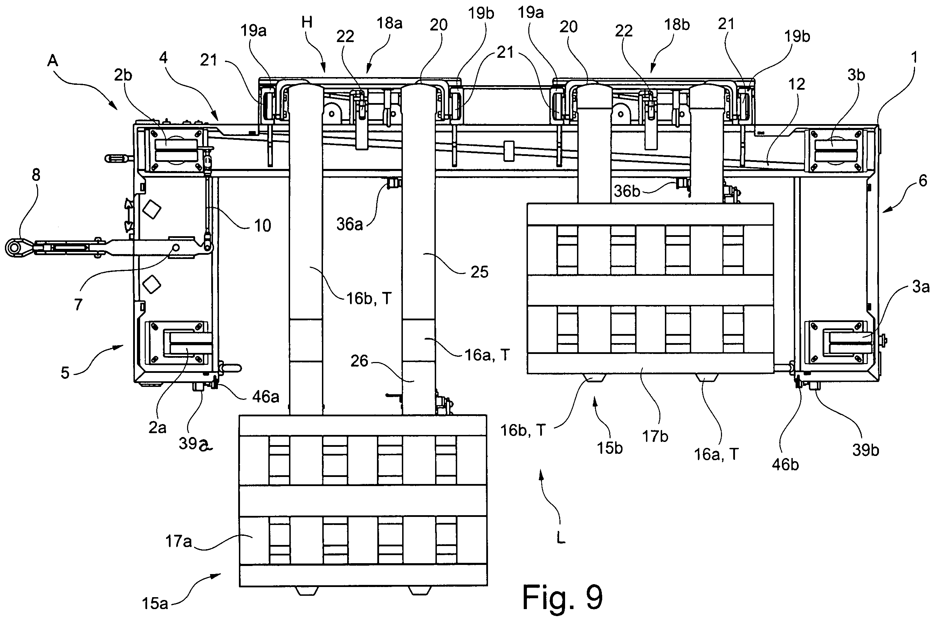

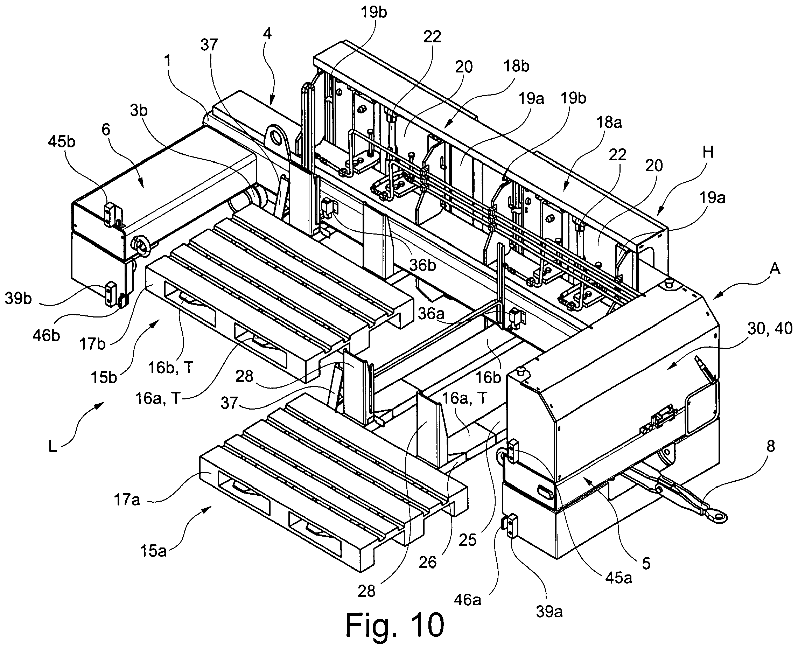

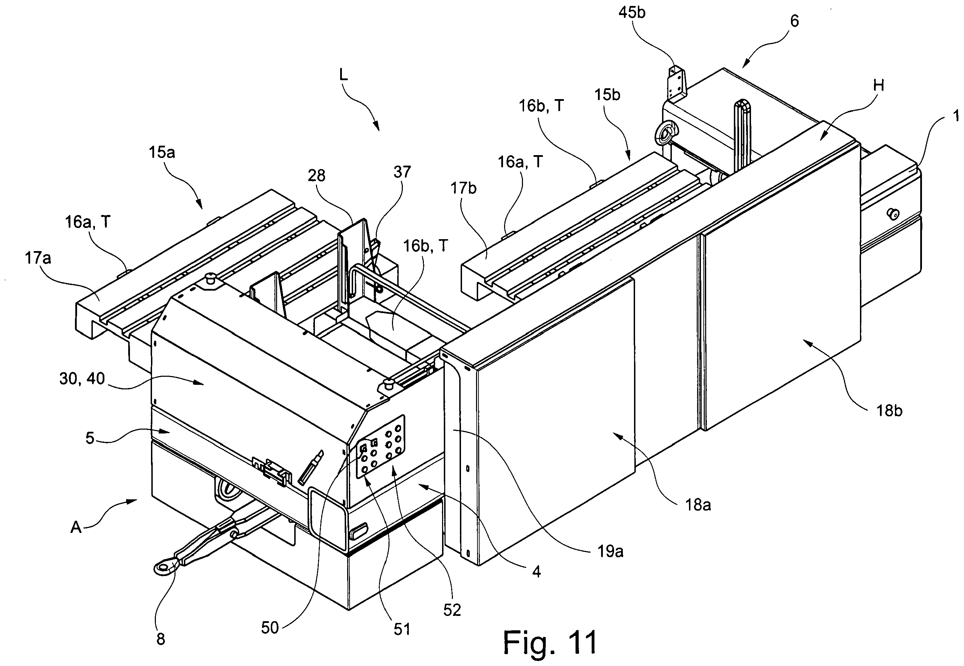

In den Figuren 1 bis 6 ist eine erste Ausführungsform eines autonomen, vollautomatischen Trailerzuganhängers A dargestellt. Die Figuren 7 bis 11 zeigen eine zweite Ausführungsform eines autonomen, vollautomatischen Trailerzuganhängers A. Gleiche Bauteile sind hierbei mit gleichen Bezugsziffern versehen.

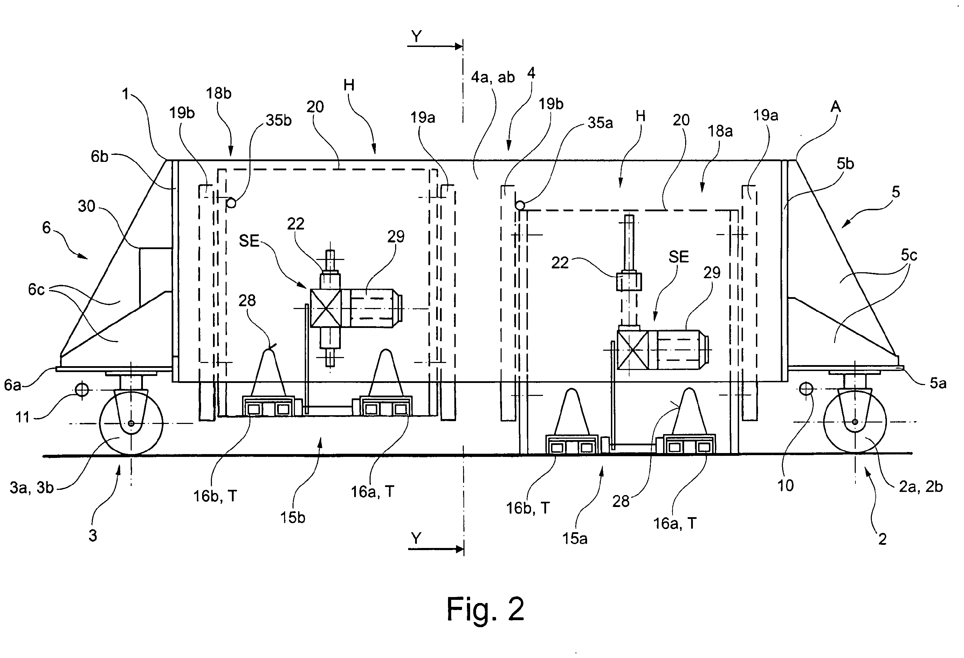

Der erfindungsgemäße Trailerzuganhänger A besteht - wie in Verbindung mit den Figuren 2 bis 6 bzw. 7 bis 11 näher hervorgeht - aus einem rollengeführten, in der Draufsicht C-förmigen Tragrahmen 1, der mit einem vorderen und hinteren Fahrwerk 2, 3 versehen ist. Der Tragrahmen 1 besteht aus einem seitlichen, in Fahrzeuglängsrichtung verlaufenden Längsträger 4 und einem vorderen, in Fahrzeugquerrichtung angeordneten Querträger 5 und einem hinteren, in Fahrzeugquerrichtung angeordneten Querträger 6.

Die Ausführungsformen der Trailerzuganhänger A der Figuren 1 bis 6 bzw. der Figuren 7 bis 11 unterscheiden sich im Wesentlichen nur durch den Aufbau des Längsträgers 4 und der beiden Querträger 5, 6.

Bei der Ausführungsform der Figuren 1 bis 6 ist eine Plattenbauweise des Tragrahmens 1 vorgesehen. Der Längsträger 4 umfasst zwei in Fahrzeuglängsrrichtung verlaufende, senkrechte Trägerplatten 4a, 4b, zwischen denen eine später beschriebene Hubeinrichtung für Lastgabeln angeordnet ist. Zwischen den Trägerplatten 4a, 4b sind senkrechten Querplatten 4d, 4e, 4f, 4g angeordnet. Der vordere Querträger 5 sowie der hintere Querträger 6 besteht jeweils aus einer Bodenplatte 5a, 6a, an der das Fahrwerk 2, 3 angeordnet ist, einer in Fahrzeugquerrichtung verlaufenden, senkrechten Trägerplatte 5b, 6b sowie einer oder mehrerer Verstrebungsrippen 5c, 6c.

Bei der Ausführungsform der Figuren 7 bis 11 ist eine Profilbauweise des Tragrahmens 1 vorgesehen. Der Längsträger 4, sowie die beiden Querträger 5, 6 sind von kastenartigen Profilen gebildet. An der Außenseite des Längsträgers 4 ist eine später beschriebene Hubeinrichtung für Lastgabeln angeordnet. Zur Verstärkung des Längsträgers 4 ist an dessen Oberseite eine Verstärkungsplatte angeordnet.

Die Fahrwerke 2, 3 bestehen jeweils aus zwei, um eine vertikale Achse lenkbaren Lenkrollen 2a, 2b, 3a, 3b, die bevorzugt mittels eines Zwangslenkungssystems miteinander gekoppelt sind.

Der Trailerzuganhänger A ist mittels einer an dem vorderen Querträger 5 um eine vertikale Schwenkachse 7 schwenkbaren Lenkdeichsel 8 mit einer Anhängevorrichtung 9, beispielsweise einer Anhängekupplung, des Zugschleppers Z verbunden. Die Lenkdeichsel 8 kann ebenfalls um eine horizontale Achse verschwenkbar sein, um bei Unebenheiten zwischen dem Zugschlepper Z und dem Trailerzuganhänger A einen Ausgleich zu ermöglichen. Die beiden vorderen Lenkrollenrollen 2a, 2b des vorderen Fahrwerks 2 sind mittels einer Lenkstange 10 miteinander verbunden und zur Übertragung der Lenkbewegung der Lenkdeichsel 8 mit der Lenkdeichsel 8 beabstandet von der Schwenkachse 7 gekoppelt. Die beiden hinteren Lenkrollen 3a, 3b des hinteren Fahrwerks sind mittels einer Lenkstange 11 miteinander verbunden und lenkbar. Zur Kopplung der vorderen Lenkrollen 2a, 2b mit den hinteren Lenkrollen 3a, 3b ist eine Kopplungseinrichtung 12 vorgesehen. Die Zwangslenkung aller vier Lenkrollen 2a, 2b, 3a, 3b ermöglicht einen spurtreuen Nachlauf des Trailerzuganhängers A mit einer geringen Spurabweichung des Trailerzuganhängers A zum Zugschlepper Z.

Der erfindungsgemäße Trailerzuganhängers A weist auf einer dem Längsträger 4 gegenüberliegenden Seite zwischen dem vorderen Querträger 5 und dem hinteren Querträger 6 eine seitliche Ladeöffnung L auf. Im Bereich der Ladeöffnung L ist der erfindungsgemäße Trailerzuganhänger A mit zwei, in Fahrzeuglängsrichtung voneinander beabstandet angeordneten Lastgabeln 15a, 15b versehen, die jeweils aus zwei in Fahrzeugquerrichtung verlaufenden Gabelzinken 16a, 16b bestehen, mittels denen ein entsprechender Ladungsträger, beispielsweise eine Palette oder eine Gitterbox, gehandhabt werden kann.

Der Trailerzuganhänger A ist somit mit einem vorderen, von der Lastgabel 15a gebildeten, Ladungsplatz und einem hinteren, von der Lastgabel 15b gebildeten, Ladungsplatz für in den Figuren 1 und 2 gestrichelt dargestellte Ladungsträger 17a, 17b versehen.

Zum Anheben und Absenken der beiden Lastgabeln 15a, 15b ist der Trailerzuganhänger A mit einer von zwei Hubwerken 18a, 18b gebildeten Hubeinrichtung H versehen, die an dem Längsträger 4 angeordnet sind.

Die Hubwerke 18a, 18b und Lastgabeln 15a, 15b weisen einen identischen Aufbau auf. Im Folgenden wird der Aufbau der Hubwerke 18a, 18b sowie der Aufbau der Lastgabeln 15a, 15b anhand des vorderen Hubwerkes 18a und der vorderen Lastgabel 15a beschrieben.

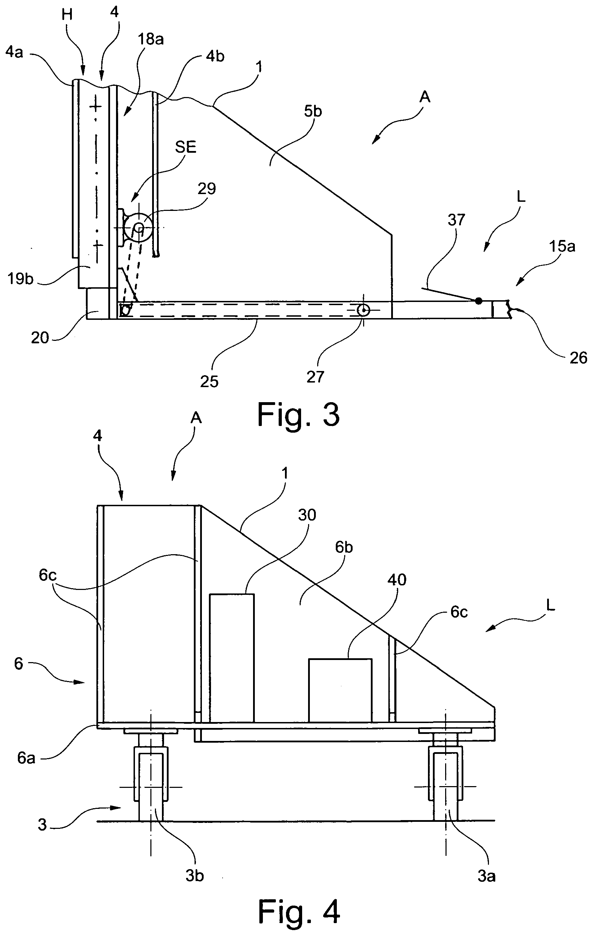

Die als Hubgerüste ausgebildeten Hubwerke 18a, 18b bestehen jeweils aus zwei, in Fahrzeuglängsrichtung beabstandet angeordneten, vertikalen und feststehenden Hubgerüstprofilen 19a, 19b, in denen ein mit der Lastgabel 15a bzw. 15b versehener Führungsschlitten 20 vertikal bewegbar angeordnet ist. Hierzu können entsprechende Paare von Führungsrollen 21 vorgesehen sein, die am Führungsschlitten 20 an jeder Seite vertikal beabstandet angeordnet sind. Wie aus der Figur 3 ersichtlich ist, sind die Hubwerke 18a, 18b in dem Zwischenraum zwischen den beiden Trägerplatten 4a, 4b des Längsträgers 4 geschützt angeordnet. Die vertikalen Hubgerüstprofile 19a, 19b sind hierbei im Bereich der Innenseite der Trägerplatte 4a an den entsprechenden Querplatten 4d, 4e, 4f, 4g des Längsträgers 4 angeordnet. Bei der Ausführungsform der Figuren 7 bis 11 sind die Hubwerke 18a, 18b an der Außenseite des Längsträger 4 und hinter einer Abdeckung geschützt angeordnet. Vertikal angeordnete Knotenbleche zwischen den Hubgerüstprofilen 19a, 19b und dem kastenartigen Längsträger 4 dienen zur Aussteifung.

Zum Anheben und Absenken der Führungsschlitten 20a, 20b in den entsprechenden Hubgerüstprofilen 19a, 19b ist jedes Hubwerk 18a, 18b mit einem Hubantrieb 22 versehen, die bevorzugt als hydraulische Hubantriebe ausgebildet sind und von jeweils einem Hubzylinder gebildet sind.

Die Lastgabeln 15a, 15b des entsprechenden Hubwerkes 18a, 18b können mittels des entsprechenden Hubantriebs 22 und somit der Hubeinrichtung H jeweils zwischen einer angehobenen Transportstellung, die in der Figur 2 an der hintere Lastgabel 15b dargestellt ist, und einer abgesenkten Übergabestellung, die in der Figur 2 an der vorderen Lastgabel 15a dargestellt ist, vertikal bewegt werden.

Die Gabelzinken 16a, 16b der jeweiligen Lastgabel 15a, 15b sind erfindungsgemäß jeweils als Teleskopgabel T und somit als Teleskopgabelzinken ausgebildet, die ein seitliches Aufnehmen und Absetzen des entsprechenden Ladungsträgers 17a, 17b über die Ladeöffnung L ermöglichen.

Die als Teleskopgabeln T ausgebildeten Gabelzinken 16a, 16b sind hierbei unterhalb des Längsträgers 4 angeordnet, um in Verbindung mit den Hubwerken 18a, 18b ein Absenken zu ermöglichen.

Die beiden als Teleskopgabeln T ausgebildeten Gabelzinken 16a, 16b jeder Lastgabel 15a, 15b bestehen jeweils - wie insbesondere aus der Figur 3 ersichtlich ist - aus einem Trägerabschnitt 25, der an dem entsprechenden vertikal bewegbaren Führungsschlitten 20 des Hubwerkes 18a bzw. 18b angeordnet und befestigt ist, und einem Lastaufnahmeabschnitt 26, der an dem Trägerabschnitt 25 längsverschiebbar angeordnet ist. Hierzu können entsprechende Führungsrollen 27 vorgesehen sein. Zum Ausschieben der auf den Lastaufnahmeabschnitt 26 befindlichen Ladungsträger 17a, 17b sind an der Oberseite der Lastaufnahmeabschnitte 26 entsprechende Mitnehmer 28 angeordnet.

Zum Ausschieben und Einziehen der Lastaufnahmeabschnitte 26 der beiden Teleskopgabeln T einer Lastgabel 15a, 15b ist jeweils eine Schubeinrichtung SE mit einem Schubantrieb 29 vorgesehen, die einen gleichzeitigen und synchronen Betrieb der beiden Teleskopgabeln T einer Lastgabel 15a bzw. 15b ermöglicht. Die Schubeinrichtungen SE mit den Schubantrieben 29 sind - wie in der Figur 3 ersichtlich ist - an dem entsprechenden Führungsschlitten 20 des zugeordneten Hubwerkes 18a, 18b angeordnet und in dem Zwischenraum zwischen den beiden Trägerplatten 4a, 4b des Längsträgers 4 geschützt angeordnet. Die Schubantriebe 29 sind bevorzugt als hydraulische Schubantriebe ausgebildet, beispielsweise Hydraulikzylindern, die zwischen dem Trägerabschnitt 25 und dem längsverschiebbaren Lastaufnahmeabschnitt 26 in den als Teleskopgabeln T ausgebildeten Gabelzinken 16a, 16b eingebaut und integriert sind.

Die seitlich bewegbaren Lastaufnahmeabschnitte 26 der beiden Teleskopgabeln T der Lastgabel 15a bzw. 15b können mittels der entsprechenden Schubeinrichtung SE jeweils zwischen einer eingezogenen Transportstellung, die in den Figuren 1, 5, 6, 7, 9 bis 11 an der hinteren Lastgabel 15b dargestellt ist, und einer ausgeschobenen Übergabestellung, die in den genannten Figuren an der vorderen Lastgabel 15a dargestellt ist, in seitlicher Richtung bewegt werden. In der Transportstellung befindet sich hierbei ein auf den Teleskopgabeln T der entsprechenden Lastgabel 15a, 15b befindlicher Ladungsträger 17a, 17b innerhalb der Fahrzeugkontur. In der Übergabestellung der Teleskopgabeln T kann ein Ladungsträger 17a, 17b vollständig seitlich neben dem Trailerzuganhänger A abgesetzt oder aufgenommen werden.

Zur Versorgung der als Hubantrieb 22 ausgebildeten Hubeinrichtungen H sowie der als Schubantrieb 29 ausgebildeten Schubeinrichtungen SE ist der Trailerzuganhänger A mit einem zentralen elektrisch betriebenen Hydraulikpumpenaggregat 30 versehen. Zur Versorgung des Hydraulikpumpenaggregats 30 mit elektrischer Energie dient das Zugfahrzeug Z, wobei eine elektrische Energieversorgungsverbindung 31, beispielsweise mittels eines entsprechenden Verbindungskabels, zwischen dem Zugfahrzeug Z und dem Trailerzuganhänger A vorgesehen ist.

Zum vollautomatischen Betrieb des Trailerzuganhängers A ist der Trailerzuganhänger A an jedem Hubwerk 18a, 18b mit einer Sensoreinrichtung 35a, 35b, beispielsweise entsprechenden Endschaltern, versehen, mit denen die angehobenen Transportstellung und einer abgesenkten Übergabestellung der jeweiligen Lastgabel 15a, 15b erfassbar ist.

Weiterhin ist der Trailerzuganhänger A an jeder Lastgabel 15a, 15b mit einer Sensoreinrichtung 36a, 36b beispielsweise entsprechenden Endschaltern, versehen, mit denen die eingezogene Transportstellung der Teleskopgabeln T jeder Lastgabel 15a bzw. 15b und die ausgefahrenen Übergabestellung der Teleskopgabel T jeder Lastgabel 15a bzw. 15b erfasst werden kann.

Darüber hinaus ist der Trailerzuganhänger A an jeder Lastgabel 15a, 15b mit einem Lasterkennungssensor 37, beispielsweise einer Lastklappe an dem Lastaufnahmeabschnitt 26 einer Teleskopgabel T zum Erfassen eines auf der Lastgabel 15a bzw. 15b befindlichen Ladungsträgers 17a, 17b versehen.

An den Gabelspitzen der bewegbaren Lastaufnahmeabschnitt 26 der Teleskopgabeln T ist für jede Lastgabel 15a, 15b mindestens eine Sensoreinrichtung 38 zur Kollisionserkennung von Hindernissen angebracht.

Weiterhin ist der erfindungsgemäße Trailerzuganhänger A mit einer Sensoreinrichtung 39a, 39b versehen, um beim Anfahren eines Bereitstellungsplatzes B in Verbindung mit dem Zugschlepper Z eine Positionierhilfe zum exakten Ausrichten der vorderen Lastgabel 15a bzw. hinteren Lastgabel 15b zu dem Bereitstellungslatz B zu ermöglichen.

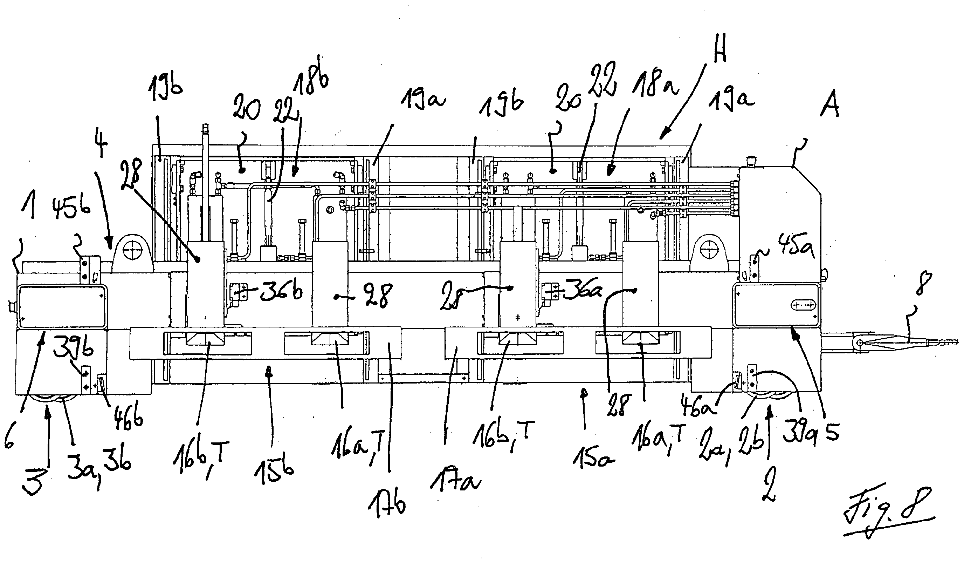

In den Figuren 8 bis 11 sind weiterhin Sensoreinrichtungen 45a, 45b am vorderen und hinteren Bereich der seitlichen Ladeöffnung L gezeigt, die in Verbindung mit bezüglich der Ladeöffnung gegenüberliegenden Reflektoren 46a, 46b eine Überwachung der Ladeöffnung L ermöglichen und/oder eine Überwachung der eingezogenen Transportstellung der Teleskopgabeln T jeder Lastgabel 15a bzw. 15b ermöglichen.

Die Sensoreinrichtungen 35a, 35b, 36a, 36b, 37a, 37b, 38, 39a, 39b, 45a, 45b stehen mit einer elektronischen Steuereinrichtung 40 in Wirkverbindung, die weiterhin die Hubeinrichtungen 22 und die Schubeinrichtungen 29 ansteuern kann. Die Energieversorgung der elektronischen Steuereinrichtung 40 erfolgt ebenfalls über die elektrische Energieversorgungsverbindung 31 aus dem Zugschlepper Z.

Für den vollautomatischen, autonomen Betrieb des Trailerzuganhängers A ist weiterhin eine Kommunikationsverbindung 50, insbesondere eine CAN-Bus Verbindung mit einem entsprechenden Verbindungskabel zwischen dem Zugschlepper Z und dem Trailerzuganhänger A vorgesehen.

Der erfindungsgemäße Trailerzuganhänger A ermöglicht im vollautomatischen, autonomen Betrieb ein Aufnahmespiel eines Ladungsträgers 17a, 17b, beispielsweise eines leeren Ladungsträgers 17a, von einem Bereitstellungsplatz B, indem durch entsprechende Ansteuerung der Hubeinrichtung H und der Schubeinrichtung SE der Teleskopgabeln T einer Lastgabel 15a, 15b die Transportstellung der unbeladenen Lastgabel 15a, 15b mit angehobenen und eingefahrenen Teleskopgabeln T verlassen und der seitlich neben dem Trailerzuganhänger A an dem Bereitstellungsplatz B stehende Ladungsträger 17a unterfahren, angehoben und anschließend die Teleskopgabeln T mit dem aufgenommenen Ladungsträger 17a zurück in die Transportstellung betätigt werden.

Der erfindungsgemäße Trailerzuganhänger A ermöglicht im vollautomatischen, autonomen Betrieb weiterhin ein Absetzspiel eines Ladungsträgers 17b, beispielsweise eines vollen Ladungsträgers, der von dem Trailerzuganhänger A an einen Bereitstellungsplatz B geliefert wird und von den in der Transportstellung befindlichen Teleskopgabeln T transportiert wird, indem durch entsprechende Ansteuerung der Hubeinrichtung H und der Schubeinrichtung SE einer Lastgabel 15a, 15b die Transportstellung der mit dem Ladungsträger 17b beladenen Lastgabel 15a, 15b mit angehobenen und eingefahrenen Teleskopgabeln T verlassen und der Ladungsträger 17b seitlich neben dem Trailerzuganhänger A an den Bereitstellungsplatz B abgesetzt und anschließend die leeren Teleskopgabeln T zurück in die Transportstellung betätigt werden können.

Über die Kommunikationsverbindung 50 kann der autonome Zugschlepper Z beim Erreichen eines Bereitstellungsplatzes B und nach entsprechender Positionierung des Trailerzuganhängers A mit der entsprechenden Lastgabel 15a bzw. 15b seitlich neben dem Bereitstellungsplatz B an den Trailerzuganhänger A einen entsprechenden Steuerbefehl zum Durchführen eines Aufnahmespiels bzw. Absetzspiels der Lastgabel 15a bzw. 15b abgeben. Während des Fahrbetriebs des Zugfahrzeugs Z wird über die Kommunikationsverbindung 50 eine entsprechende Zustandsmeldung an den Trailerzuganhänger A ausgegeben, um den Betrieb der Hubeinrichtungen H sowie der Schubeinrichtungen SE im Fahrbetrieb des Trailerzugsystems S zu sperren.

Von dem Trailerzuganhänger A wird über die Kommunikationsverbindung 50 beim Durchführen eines Absetzspiels bzw. eines Aufnahmespiels eines Ladungsträgers 17a, 17b nach dem Verlassen der Transportstellung der entsprechenden Lastgabel 15a, 15b eine Zustandsmeldung an den Zugschlepper Z ausgegeben, um den Betrieb, insbesondere den Fahrbetrieb, des Zugschlepper Z während des Absetzspiels oder des Aufnahmespiels zu sperren. Bei Erreichen der Transportstellung am Ende eines Aufnahmespiels bzw. eines Absetzspiels wird über die Kommunikationsverbindung 50 an den Zugschlepper Z eine entsprechende Zustandsmeldung ausgegeben, um den Fahrbetrieb des Zugschleppers Z wieder freizugeben.

Bei einem erfindungsgemäßen vollautomatischen, autonomen Trailerzugsystem S ist an dem Trailerzuganhänger A zum Auswechseln eines Ladungsträgers 17a an einem Bereitstellungsplatz B gegen einen anderen Ladungsträger 17b der von der vorderen Lastgabel 15a gebildete vordere Ladungsplatz nicht mit einem Ladungsträger beladen und der von der hinteren Lastgabel 15b gebildete hintere Ladungsplatz mit einem Ladungsträger 17b beladen. Der autonome Zugschlepper Z positioniert zum Auswechseln des an dem Beladungsplatz B befindlichen Ladungsträgers 17a den Trailerzuganhänger A-wie in der Figur 1, bzw. den Figuren 5, 6, 7 bis 11 dargestelltmit dem vorderen Ladungsplatz und somit der vorderen, unbeladenen Lastgabel 15a seitlich neben dem Bereitstellungsplatz B und gibt an den Trailerzuganhänger A einen Steuerbefehl zum Durchführen eines Aufnahmespiels mit der vorderen Lastgabel 15a zum Aufnehmen des Ladungsträgers 17a von dem Bereitstellungsplatz B in den vorderen Ladungsplatz. Nach Erreichen der Transportstellung der vorderen Lastgabel 15a am Ende des Aufnahmespiels positioniert der Zugschlepper Z den Trailerzuganhänger A mit dem hinteren Ladungsplatz und somit der hinteren, beladenen Lastgabel 15b seitlich neben den Bereitstellungsplatz B und gibt an den Trailerzuganhänger A einen Steuerbefehl zum Durchführen eines Absetzspiels des auf den hinteren Lastgabeln 15b befindlichen Ladungsträgers 17b auf den Bereitstellungslatz B. Ein Bereitstellungsplatz B kann somit vollautomatisiert durch den von dem erfindungsgemäßen Trailerzuganhänger A durchgeführten Lastwechsel mit einem Ladungsträger Be- und Entladen werden.

Mit der elektronischen Steuereinrichtung 40 kann ein Betriebsartenwahlschalter 50 in Verbindung stehen, mit dem anstelle des vollautomatischen, autonomen Betriebs des Trailerzuganhängers A von einer Bedienperson ein halbautomatischer Betrieb und/oder ein rein manueller Betrieb ermöglicht werden kann. Für den halbautomatischen Betrieb können Betätigungselemente 51 für ein Aufnahmespiel bzw. Absetzspiel der entsprechenden Lastgabel 15a bzw. 15b vorgesehen sein, mit denen ein Absetzspiel oder ein Aufnahmespiel der entsprechenden Lastgabel 15a bzw. 15b nach Betätigen eines entsprechenden Betätigungselements von dem Trailerzuganhänger A selbstständig durchgeführt wird. Für den rein manuellen Betrieb können entsprechende Betätigungselemente 52 vorgesehen sein, mit denen die Hubeinrichtungen 22 sowie die Schubeinrichtungen 29 der entsprechenden Lastgabeln 15a bzw. 15b von der Bedienperson einzeln betätigt werden können, um bei einem Aufnahmespiel oder einem Absetzspiel die nötigen Hub- und Senkbewegungen der Lastgabel 15a bzw. 15b sowie die Ausschub- und Einzugbewegungen der entsprechenden Teleskopgabeln T entsprechend manuell zu steuern.

## Patentansprüche

1. Trailerzuganhänger (A) für den innerbetrieblichen Warentransport, wobei der Trailerzuganhänger (A) einen rollengeführten Tragrahmen (1) mit einem vorderen und hinteren Fahrwerk (2, 3) aufweist, der aus einem seitlichen Längsträger (4), einem vorderen Querträger (5) und einem hinteren Querträger (6) besteht, wobei der Tragrahmen (1) auf einer dem Längsträger (4) gegenüberliegenden Seite eine Ladeöffnung (L) aufweist und der Trailerzuganhänger (A) mit mindestens einer mittels einer Hubeinrichtung (H) anhebbar und absenkbar angeordneten, aus mehreren in Fahrzeugquerrichtung verlaufenden Gabelzinken (16a; 16b) gebildeten Lastgabel (15a; 15b) versehen ist, **dadurch gekennzeichnet, dass** die Gabelzinken (16a; 16b) der Lastgabel (15a; 15b) jeweils als Teleskopgabeln (T) ausgebildet sind, die als Teleskopgabelzinken ausgebildet sind und aus einem Trägerabschnitt (25) und einen an dem Trägerabschnitt (25) längsverschiebbaren Lastaufnahmeabschnitt (26) bestehen, wobei die Teleskopgabeln (T) mit den längsverschiebbaren Lastaufnahmeabschnitten (26) ein seitliches Aufnehmen und Absetzen eines Ladungsträgers (17a; 17b) in Fahrzeugquerrichtung über die Ladeöffnung (L) ermöglichen.

2. Trailerzuganhänger nach Anspruch 1, **dadurch gekennzeichnet, dass** die Hubeinrichtung (H) mindestens ein an dem Längsträger (4) angeordnetes Hubwerk (18a; 18b) zum Anheben und Absenken der von den Gabelzinken (16a, 16b) gebildete Lastgabel (15a; 15b) umfasst.

3. Trailerzuganhänger nach Anspruch 1 oder 2, **dadurch gekennzeichnet, dass** der Trailerzuganhänger (A) mit zwei an dem Längsträger (4) angeordneten Hubwerken (18a, 18b) versehen ist, mittels denen jeweils eine aus zwei Gabelzinken (16a, 16b) bestehende Lastgabel (15a, 15) anhebbar und absenkbar ist.

4. Trailerzuganhänger nach einem der Ansprüche 1 bis 3, **dadurch gekennzeichnet, dass** die Teleskopgabeln (T) jeweils aus einem Trägerabschnitt (25), der an einem in dem Hubwerk (18a; 18b) vertikal bewegbaren Führungsschlitten (20) angeordnet ist, und einem Lastaufnahmeabschnitt (26) bestehen, der an dem Trägerabschnitt (25) längsverschiebbar angeordnet ist.

5. Trailerzuganhänger nach einem der Ansprüche 1 bis 4, **dadurch gekennzeichnet, dass** zum Ausschieben und Einziehen der Teleskopgabeln (T) eine Schubeinrichtung (SE) vorgesehen ist.

6. Trailerzuganhänger nach Anspruch 5, **dadurch gekennzeichnet, dass** die Lastgabel (15a; 15b) von zwei Gabelzinken (16a, 16b) gebildet ist, wobei die Schubeinrichtung (SE) einen gleichzeitigen Betrieb beider Teleskopgabeln (T) einer Lastgabel (15a; 15b) ermöglicht.

7. Trailerzuganhänger nach einem der Ansprüche 1 bis 6, **dadurch gekennzeichnet, dass** der Trailerzuganhänger (A) als vollautomatischer, autonomer Trailerzuganhänger (A) ausgebildet ist, der einen vollautomatischen Betrieb der Hubeinrichtung (H) und der Schubeinrichtung (SE) der Teleskopgabeln (T) mit einem automatischen Absetzen eines Ladungsträgers (17a; 17b) an einem Bereitstellungsplatz (B) bzw. mit einem automatischen Aufnehmen eines Ladungsträgers (17a; 17b) an dem Bereitstellungsplatz (B) aufweist.

8. Trailerzuganhänger nach einem der Ansprüche 1 bis 7, **dadurch gekennzeichnet, dass** der Trailerzuganhänger (T) eine Sensoreinrichtung (35a; 35b) zum Erfassen einer angehobenen Transportstellung der Lastgabel (15a; 15b) und einer abgesenkten Übergabestellung der Lastgabel (15a; 15b) aufweist.

9. Trailerzuganhänger nach einem der Ansprüche 1 bis 8, **dadurch gekennzeichnet, dass** der Trailerzuganhänger (T) mit einer Sensoreinrichtung (36a; 36b) zum Erfassen einer eingezogen Transportstellung der Teleskopgabel (T) und einer ausgefahrenen Übergabestellung der Teleskopgabel (T) versehen ist.

10. Trailerzuganhänger nach einem der Ansprüche 1 bis 9, **dadurch gekennzeichnet, dass** der Trailerzuganhänger (T) mit einem Lasterkennungssensor (37) zum Erfassen eines auf der Lastgabel (15a; 15b) befindlichen Ladungsträgers (17a; 17b) versehen ist.

11. Trailerzuganhänger nach einem der Ansprüche 1 bis 10, **dadurch gekennzeichnet, dass** die Teleskopgabel (T) an der Gabelspitze mit einer Sensoreinrichtung (38) als Kollisionserkennung versehen ist.

12. Trailerzuganhänger nach einem der Ansprüche 1 bis 11, **dadurch gekennzeichnet, dass** der Trailerzuganhänger (T) mit einer Sensoreinrichtung (39a; 39b) zum Erkennen eines an einem Bereitstellungsplatz (B) befindlichen Ladungsträgers (17a; 17b) versehen ist.

13. Trailerzuganhänger nach einem der Ansprüche 1 bis 12, **dadurch gekennzeichnet, dass** der Trailerzuganhänger (T) mit einer Sensoreinrichtung (45a; 45b) zur Überwachung der seitlichen Ladeöffnung (L) versehen ist.

14. Trailerzuganhänger nach einem der Ansprüche 2 bis 13, **dadurch gekennzeichnet, dass** die Hubeinrichtung (H) und/oder die Schubeinrichtung (SE) als hydraulische Antriebe (22; 29) ausgebildet sind, die mittels eines an dem Trailerzuganhänger (T) angeordneten elektrisch betriebenen Hydraulikpumpenaggregats (30) versorgbar sind.

15. Trailerzuganhänger nach einem der Ansprüche 8 bis 14, **dadurch gekennzeichnet, dass** der Trailerzuganhänger (T) mit einer elektronischen Steuereinrichtung (40) versehen ist, die mit den Sensoreinrichtungen (35a; 35; 36a; 36b; 37; 38; 39a; 39b; 45a, 45b) sowie der Hubeinrichtung (H) und der Schubeinrichtung (SE) in Wirkverbindung steht.

16. Trailerzuganhänger nach einem der Ansprüche 7 bis 15, **dadurch gekennzeichnet, dass** der Trailerzuganhänger (T) mit einem Betriebsartenwahlschalter (50) für den vollautomatischen Betrieb, für einen halbautomatischen Betrieb und/oder für einen manuellen Betrieb der Hubeinrichtung (H) sowie der Schubeinrichtung (SE) versehen ist.

17. Trailerzuganhänger nach Anspruch 15 oder 16, **dadurch gekennzeichnet, dass** die elektronischen Steuereinrichtung (40) eine Kommunikationsverbindung (50) zu einem Zugschlepper aufweist.

18. Trailerzuganhänger nach Anspruch 17, **dadurch gekennzeichnet, dass** während eines Aufnahmespiels und/oder eines Ablagespiels im vollautomatischen Betrieb von der elektronischen Steuereinrichtung (40) über die Kommunikationsverbindung (50) eine Zustandsmeldung an einen Zugschlepper (Z) ausgeben wird, um den Fahrbetrieb des Zugschleppers (Z) zu sperren.

19. Trailerzuganhänger nach Anspruch 17 oder 18, **dadurch gekennzeichnet, dass** bei Erreichen der Transportstellung am Ende eines Aufnahmespiels und/oder eines Absetzspiels im vollautomatischen Betrieb von der Steuereinrichtung (40) über die Kommunikationsverbindung (50) eine Zustandsmeldung an einen Zugschlepper (Z) ausgeben wird, um den Fahrbetrieb des Zugschleppers (Z) freizugeben.

20. Trailerzuganhänger nach einem der Ansprüche 14 bis 19, **dadurch gekennzeichnet, dass** der Trailerzuganhänger (T) eine elektrische Energieversorgungsverbindung (31) zur Versorgung des elektrisch betriebenen Hydraulikpumpenaggregats (30) und/oder der elektronischen Steuereinrichtung (31) mit elektrischer Energie von einem Zugschlepper (Z) aufweist.

21. Trailerzugsystem (S) bestehend aus mindestens einem vollautomatischen Trailerzuganhänger (A) nach einem Ansprüche 7 bis 20 und einem vollautomatischen Zugschlepper (Z).

22. Trailerzugsystem nach Anspruch 21, **dadurch gekennzeichnet, dass** zur Energieversorgung des Trailerzuganhängers (A) eine Energieversorgungsverbindung (31), insbesondere eine elektrische Energieversorgungsverbindung, zwischen dem Zugschlepper (Z) und dem Trailerzuganhänger (A) ausgebildet ist.

23. Trailerzugsystem nach Anspruch 21 oder 22, **dadurch gekennzeichnet, dass** eine Kommunikationsverbindung (50), insbesondere eine bidirektionale Kommunikationsverbindung, zwischen dem Zugschlepper (Z) und dem Trailerzuganhänger (A) für den vollautomatischen Betrieb ausgebildet ist.

24. Trailerzugsystem nach Anspruch 23, **dadurch gekennzeichnet, dass** über die Kommunikationsverbindung (50) von dem Zugschlepper (Z) im Fahrbetrieb an den Trailerzuganhänger (A) eine Zustandsmeldung ausgegeben wird, um die Hubeinrichtung (H) und/oder die Schubeinrichtung (SE) des Trailerzuganhängers (A) zu sperren.

25. Trailerzugsystem nach Anspruch 23 oder 24, **dadurch gekennzeichnet, dass** von dem Zugschlepper (Z) über die Kommunikationsverbindung (50) nach Erreichen eines Bereitstellungsplatzes (B) an den Trailerzuganhänger (A) ein Steuerbefehl zum Durchführen eines Absetzspiels und/oder eines Aufnahmespiels eines Ladungsträgers (17a; 17b) ausgegeben wird.

26. Verfahren zum Betrieb eines vollautomatischen Trailerzugsystems (S) nach einem der Ansprüche 21 bis 25 umfassend mindestens einen vollautomatischen Trailerzuganhänger (A), der mit zwei Lastgabel (15a, 15b) für die Aufnahme von zwei Ladungsträgern (17a, 17b) versehen ist, wobei an dem Trailerzuganhänger (A) die vordere Lastgabel (15a) nicht mit einem Ladungsträger beladen und die hintere Lastgabel (15b) mit einem Ladungsträger (17b) beladen ist, wobei zum Durchführen eines Austausches eines Ladungsträgers (17a) an einem Bereitstellungsplatz (B) die folgenden Schritte durchgeführt werden:
• In einem ersten Schritt, Positionierung des Trailerzuganhängers (A) mit der vorderen Lastgabel (15a) seitlich neben dem Bereitstellungsplatz (B) durch den Zugschlepper (Z);
• In einem zweiten Schritt, Ausgaben eines Steuerbefehls von dem Zugschlepper (Z) an den Trailerzuganhänger (A) zum Durchführen eines Aufnahmespiels mit der vorderen Lastgabel (15a);
• In einem dritten Schritt, nach Erreichen der Transportstellung der mit dem aufgenommenen Ladungsträger (17a) beladenen vorderen Lastgabel (15a), Positionierung des Trailerzuganhängers (A) mit der hinteren Lastgabel (15b) seitlich neben dem Bereitstellungsplatz (B) durch den Zugschlepper (Z) und
• In einem vierten Schritt, Ausgabe eines Steuerbefehls von dem Zugschlepper (Z) an den Trailerzuganhänger (A) zum Durchführen eines Absetzspiels mit der hinteren Lastgabel (15b).

## Claims

1. Trailer-train trailer (A) for goods transport within a factory, wherein the trailer-train trailer (A) has a roller-guided supporting frame (1) with a front and rear chassis (2, 3), said supporting frame consisting of a lateral longitudinal member (4), a front crossmember (5) and a rear crossmember (6), wherein the supporting frame (1) has a loading opening (L) on a side opposite the longitudinal member (4), and the trailer-train trailer (A) is provided with at least one load fork (15a; 15b) which is arranged such that it can be raised and lowered by means of a lifting device (H) and is formed from a plurality of fork tines (16a; 16b) running in the transverse direction of the vehicle, **characterized in that** the fork tines (16a; 16b) of the load fork (15a; 15b) are each configured as telescopic forks (T) which are configured as telescopic fork tines and consist of a carrier portion (25) and a load-pickup portion (26) which is displaceable longitudinally on the carrier portion (25), wherein the telescopic forks (T) with the longitudinally displaceable load-pickup portions (26) permit lateral pickup and depositing of a load carrier (17a; 17b) in the transverse direction of the vehicle via the loading opening (L).

2. Trailer-train trailer according to Claim 1, **characterized in that** the lifting device (H) comprises at least one lifting mechanism (18a; 18b), which is arranged on the longitudinal member (4), for lifting and lowering the load fork (15a; 15b) formed by the fork tines (16a, 16b).

3. Trailer-train trailer according to Claim 1 or 2, **characterized in that** the trailer-train trailer (A) is provided with two lifting mechanisms (18a, 18b) which are arranged on the longitudinal member (4) and by means of which a respective load fork (15a, 15) consisting of two fork tines (16a, 16b) is raiseable and lowerable.

4. Trailer-train trailer according to one of Claims 1 to 3, **characterized in that** the telescopic forks (T) each consist of a carrier portion (25), which is arranged on a guide carriage (20) which is moveable vertically in the lifting mechanism (18a; 18b), and a load-pickup portion (26), which is arranged in a longitudinally displaceable manner on the carrier portion (25).

5. Trailer-train trailer according to one of Claims 1 to 4, **characterized in that** a pushing device (SE) is provided for pushing out and pulling in the telescopic forks (T).

6. Trailer-train trailer according to Claim 5, **characterized in that** the load fork (15a; 15b) is formed by two fork tines (16a, 16b), wherein the pushing device (SE) permits simultaneous operation of both telescopic forks (T) of a load fork (15a; 15b).

7. Trailer-train trailer according to one of Claims 1 to 6, **characterized in that** the trailer-train trailer (A) is configured as a fully automatic, autonomous trailer-train trailer (A) which has a fully automatic operation of the lifting device (H) and of the pushing device (SE) of the telescopic forks (T) with automatic depositing of a load carrier (17a; 17b) at a preparation point (B) or with automatic picking up of a load carrier (17a; 17b) at the preparation point (B).

8. Trailer-train trailer according to one of Claims 1 to 7, **characterized in that** the trailer-train trailer (T) has a sensor device (35a; 35b) for sensing a raised transport position of the load fork (15a; 15b) and a lowered transfer position of the load fork (15a; 15b).

9. Trailer-train trailer according to one of Claims 1 to 8, **characterized in that** the trailer-train trailer (T) is provided with a sensor device (36a; 36b) for sensing a retracted transport position of the telescopic fork (T) and an extended transfer position of the telescopic fork (T).

10. Trailer-train trailer according to one of Claims 1 to 9, **characterized in that** the trailer-train trailer (T) is provided with a load detection sensor (37) for sensing a load carrier (17a; 17b) located on the load fork (15a; 15b).

11. Trailer-train trailer according to one of Claims 1 to 10, **characterized in that** the telescopic fork (T) is provided with a sensor device (38) on the fork tip as collision detection means.

12. Trailer-train trailer according to one of Claims 1 to 11, **characterized in that** the trailer-train trailer (T) is provided with a sensor device (39a; 39b) for detecting a load carrier (17a; 17b) located at a preparation point (B).

13. Trailer-train trailer according to one of Claims 1 to 12, **characterized in that** the trailer-train trailer (T) is provided with a sensor device (45a; 45b) for monitoring the lateral loading opening (L).

14. Trailer-train trailer according to one of Claims 2 to 13, **characterized in that** the lifting device (H) and/or the pushing device (SE) are configured as hydraulic drives (22; 29) which can be supplied by means of an electrically operated hydraulic pump unit (30) arranged on the trailer-train trailer (T).

15. Trailer-train trailer according to one of Claims 8 to 14, **characterized in that** the trailer-train trailer (T) is provided with an electronic control device (40) which is operatively connected to the sensor devices (35a; 35; 36a; 36b; 37; 38; 39a; 39b; 45a; 45b) and to the lifting device (H) and to the pushing device (SE).

16. Trailer-train trailer according to one of Claims 7 to 15, **characterized in that** the trailer-train trailer (T) is provided with an operating mode selector switch (50) for fully automatic operation, for semi-automatic operation and/or for manual operation of the lifting device (H) and of the pushing device (SE).

17. Trailer-train trailer according to Claim 15 or 16, **characterized in that** the electronic control device (40) has a communication connection (50) to a tractor.

18. Trailer-train trailer according to Claim 17, **characterized in that**, during a pickup play and/or a depositing play in fully automatic operation, a status message is output by the electronic control device (40) via the communication connection (50) to a tractor (Z) in order to block the driving mode of the tractor (Z).

19. Trailer-train trailer according to Claim 17 or 18, **characterized in that**, when the transport position is reached at the end of a pickup play and/or of a depositing play in fully automatic operation, a status message is output by the control device (40) via the communication connection (50) to a tractor (Z) in order to release the driving mode of the tractor (Z).

20. Trailer-train trailer according to one of Claims 14 to 19, **characterized in that** the trailer-train trailer (T) has an electric energy supply connection (31) for suppling the electrically operated hydraulic pump unit (30) and/or the electronic control device (31) with electrical energy from a tractor (Z).

21. Trailer-train system (S) consisting of at least one fully automatic trailer-train trailer (A) according to one of Claims 7 to 20 and a fully automatic tractor (Z).

22. Trailer-train system according to Claim 21, **characterized in that**, for the energy supply of the trailer-train trailer (A), an energy supply connection (31), in particular an electric energy supply connection, is configured between the tractor (Z) and the trailer-train trailer (A).

23. Trailer-train system according to Claim 21 or 22, **characterized in that** a communication connection (50), in particular a bidirectional communication connection, is configured between the tractor (Z) and the trailer-train trailer (A) for fully automatic operation.

24. Trailer-train system according to Claim 23, **characterized in that** a status message is output by the tractor (Z) via the communication connection (50) to the trailer-train trailer (A) in the driving mode in order to block the lifting device (H) and/or the pushing device (SE) of the trailer-train trailer (A).

25. Trailer-train system according to Claim 23 or 24, **characterized in that**, after a preparation point (B) is reached, a control command is output by the tractor (Z) via the communication connection (50) to the trailer-train trailer (A) for carrying out a depositing play and/or a pickup play of a load carrier (17a; 17b).

26. Method for operating a fully automatic trailer-train system (S) according to one of Claims 21 to 25, comprising at least one fully automatic trailer-train trailer (A) which is provided with two load forks (15a, 15b) for picking up two load carriers (17a, 17b), wherein, on the trailer-train trailer (A), the front load fork (15a) is not loaded with a load carrier and the rear load fork (15b) is loaded with a load carrier (17b), wherein, in order to carry out an exchange of a load carrier (17a) at a preparation point (B), the following steps are carried out:
• in a first step, positioning the trailer-train trailer (A) with the front load fork (15a) laterally next to the preparation point (B) by the tractor (Z) ;
• in a second step, outputting a control command from the tractor (Z) to the trailer-train trailer (A) for carrying out a pickup play with the front load fork (15a);
• in a third step, after reaching the transport position of the front load fork (15a) loaded with the picked-up load carrier (17a), positioning the trailer-train trailer (A) with the rear load fork (15b) laterally next to the preparation point (B) by the tractor (Z), and
• in a fourth step, outputting a control command from the tractor (Z) to the trailer-train trailer (A) for carrying out a depositing play with the rear load fork (15b).

## Revendications

1. Remorque de train de de remorques (A) pour le transport interne de marchandises, dans lequel la remorque de train de remorques (A) comporte un châssis de support guidé par rouleaux (1) pourvu de trains de roulement avant et arrière (2, 3), qui se compose d'un profilé longitudinal latéral (4), d'un profilé transversal avant (5) et d'un profilé transversal arrière (6), dans lequel le châssis de support (1) comporte une ouverture de chargement (L) sur un côté opposé au profilé longitudinal (4) et la remorque de train de remorques (A) est pourvue d'au moins une fourche de charge (15a ; 15b) qui est disposée de manière à pouvoir être soulevée et abaissée au moyen d'un dispositif de levage (H) et est constituée de plusieurs bras de fourche (16a ; 16b) s'étendant dans la direction transversale du véhicule, **caractérisé en ce que** les bras de fourche (16a ; 16b) de la fourche de charge (15a ; 15b) sont chacun réalisés sous la forme de fourches télescopiques (T), qui sont réalisées sous la forme de bras télescopiques et consistent en une partie porteuse (25) et une partie réceptrice de charge (26) déplaçable longitudinalement sur la partie porteuse (25), dans lequel les fourches télescopiques (T) présentant les sections réceptrices de charge (26) déplaçables longitudinalement permettent à un porte-charge (17a ; 17b) d'être saisi et déposé latéralement dans la direction transversale du véhicule par l'intermédiaire de l'ouverture de chargement (L).

2. Remorque de train de remorques selon la revendication 1, **caractérisée en ce que** le dispositif de levage (H) comprend au moins un mécanisme de levage (18a ; 18b) disposé sur le profilé longitudinal (4) pour soulever et abaisser la fourche de charge (15a ; 15b) formée par les bras de fourche (16a, 16b).

3. Remorque de train de remorques selon la revendication 1 ou 2, **caractérisée en ce que** la remorque de train de remorques (A) est pourvue de deux mécanismes de levage (18a, 18b) disposés sur le profilé longitudinal (4), au moyen desquels une fourche de charge (15a, 15) constituée de deux bras de fourche (16a, 16b) peut être levée et abaissée.

4. Remorque de train de remorques selon l'une des revendications 1 à 3, **caractérisée en ce que** les fourches télescopiques (T) se composent respectivement d'une section de support (25) qui est disposée sur un chariot de guidage (20) déplaçable verticalement dans le mécanisme de levage (18a ; 18b) et d'une section de saisie de charge (26) qui est disposée de manière à pouvoir se déplacer longitudinalement sur la section de support (25).

5. Remorque de train de remorques selon l'une des revendications 1 à 4, **caractérisée en ce qu'**il est prévu un dispositif de poussée (SE) pour le déploiement et la rétraction des fourches télescopiques (T).

6. Remorque de train de remorques selon la revendication 5, **caractérisée en ce que** la fourche de charge (15a ; 15b) est formée par deux bras de fourche (16a, 16b), dans laquelle le dispositif de poussée (SE) permet un fonctionnement simultané des deux fourches télescopiques (T) d'une fourche de charge (15a ; 15b).

7. Remorque de train de remorques selon l'une des revendications 1 à 6, **caractérisée en ce que** la remorque de train de remorques (A) est réalisée sous la forme d'une remorque de train de remorques (A) entièrement automatique et autonome qui présente un fonctionnement entièrement automatique du dispositif de levage (H) et du dispositif de poussée (SE) des fourches télescopiques (T) avec un dépôt automatique d'un porte-charge (17a ; 17b) à un emplacement de mise à disposition (B) ou avec une saisie automatique d'un porte-charge (17a ; 17b) à l'emplacement de mise à disposition (B).

8. Remorque de train de remorques selon l'une des revendications 1 à 7, **caractérisée en ce que** la remorque de train de remorques (T) comporte un dispositif capteur (35a ; 35b) destiné à détecter une position de transport relevée de la fourche de charge (15a ; 15b) et une position de transfert abaissée de la fourche de charge (15a ; 15b).

9. Remorque de train de remorques selon l'une des revendications 1 à 8, **caractérisée en ce que** la remorque de train de remorques (T) est pourvue d'un dispositif capteur (36a ; 36b) destiné à détecter une position de transport rétractée de la fourche télescopique (T) et une position de transfert déployée de la fourche télescopique (T) .

10. Remorque de train de remorques selon l'une des revendications 1 à 9, **caractérisée en ce que** la remorque de train de remorques (T) est pourvue d'un capteur de détection de charge (37) destiné à détecter un porte-charge (17a ; 17b) se trouvant sur la fourche de charge (15a ; 15b).

11. Remorque de train de remorques selon l'une des revendications 1 à 10, **caractérisée en ce que** la fourche télescopique (T) est pourvue, au niveau de la pointe de la fourche, d'un dispositif capteur (38) destiné à détecter des collisions.

12. Remorque de train de remorques selon l'une des revendications 1 à 11, **caractérisée en ce que** la remorque de train de remorques (T) est pourvue d'un dispositif capteur (39a ; 39b) destiné à détecter un porte-charge (17a ; 17b) se trouvant à un emplacement de mise à disposition (B).

13. Remorque de train de remorques selon l'une des revendications 1 à 12, **caractérisée en ce que** la remorque de train de remorques (T) est pourvue d'un dispositif capteur (45a ; 45b) destiné à surveiller l'ouverture de chargement latérale (L).

14. Remorque de train de remorques selon l'une des revendications 2 à 13, **caractérisée en ce que** le dispositif de levage (H) et/ou le dispositif de poussée (SE) sont réalisés sous la forme d'entraînements hydrauliques (22 ; 29) qui peuvent être alimentés au moyen d'une unité à pompe hydraulique (30) commandée électriquement et disposée sur la remorque de train de remorques (T).

15. Remorque de train de remorques selon l'une des revendications 8 à 14, **caractérisée en ce que** la remorque de train de remorques (T) est pourvue d'un dispositif de commande électronique (40) qui est relié de manière opérationnelle aux dispositifs capteurs (35a ; 35 ; 36a ; 36b ; 37 ; 38 ; 39a ; 39b ; 45a, 45b) ainsi qu'au dispositif de levage (H) et au dispositif de poussée (SE) .

16. Remorque de train de remorques selon l'une des revendications 7 à 15, **caractérisée en ce que** la remorque de train de remorques (T) est pourvue d'un sélecteur de mode de fonctionnement (50) pour le fonctionnement entièrement automatique, pour un fonctionnement semi-automatique et/ou pour un fonctionnement manuel du dispositif de levage (H) ainsi que du dispositif de poussée (SE).

17. Remorque de train de remorques selon la revendication 15 ou 16, **caractérisée en ce que** le dispositif de commande électronique (40) comporte une liaison de communication (50) avec un tracteur.

18. Remorque de train de remorques selon la revendication 17, **caractérisée en ce que**, pendant une opération de saisie et/ou une opération de dépôt en mode entièrement automatique, le dispositif de commande électronique (40) délivre un signal d'état à un tracteur (Z) par l'intermédiaire de la liaison de communication (50) afin d'empêcher le fonctionnement du tracteur (Z).

19. Remorque de train de remorques selon la revendication 17 ou 18, **caractérisée en ce que** lorsque la position de transport est atteinte à la fin d'une opération de saisie et/ou d'une opération de dépôt en mode entièrement automatique, un signal d'état est délivré par le dispositif de commande (40) par l'intermédiaire de la liaison de communication (50) à un tracteur (Z) afin d'autoriser le déplacement du tracteur (Z).

20. Remorque de train de remorques selon l'une des revendications 14 à 19, **caractérisée en ce que** la remorque de train de remorques (T) comporte une liaison d'alimentation en énergie électrique (31) destinée à alimenter l'unité à pompe hydraulique (30) commandée électriquement et/ou le dispositif de commande électronique (31) en énergie électrique provenant d'un tracteur (Z).

21. Système de train de remorques (S) composé d'au moins une remorque de train de remorques (A) entièrement automatique selon les revendications 7 à 20 et d'un tracteur (Z) entièrement automatique.

22. Système de train de remorques selon la revendication 21, **caractérisé en ce qu'**une liaison d'alimentation en énergie (31) de la remorque de train de remorques (A), en particulier une liaison d'alimentation en énergie électrique, est établie entre le tracteur (Z) et la remorque de train de remorques (A).

23. Système de train de remorques selon la revendication 21 ou 22, **caractérisé en ce qu'**une liaison de communication (50), en particulier une liaison de communication bidirectionnelle, est établie entre le tracteur (Z) et la remorque de train de remorques (A) pour le fonctionnement entièrement automatique.

24. Système de train de remorques selon la revendication 23, **caractérisé en ce qu'**un signal d'état est délivré par le tracteur (Z) pendant son déplacement à la remorque de train de remorques (A) par l'intermédiaire de la liaison de communication (50) afin d'empêcher le fonctionnement du dispositif de levage (H) et/ou du dispositif de poussée (SE) de la remorque de train de remorques (A).

25. Système de train de remorques selon la revendication 23 ou 24, **caractérisé en ce qu'**un ordre de commande destiné à l'exécution d'une opération de dépôt et/ou d'une opération de saisie d'un porte-charge (17a ; 17b) est délivré par le tracteur (Z) par l'intermédiaire de la liaison de communication (50) à la remorque de train de remorques (A) après qu'elle a atteint un emplacement de mise à disposition (B).

26. Procédé de mise en oeuvre d'un système de train de remorques (S) entièrement automatique selon l'une des revendications 21 à 25, comprenant au moins une remorque de train de remorques (A) entièrement automatique pourvue de deux fourches de charge (15a, 15b) destinées recevoir des porte-charges (17a, 17b), dans lequel la fourche de charge avant (15a) n'est pas chargée avec un porte-charge sur la remorque de train de remorques (A) et la fourche de charge arrière (15b) est chargée avec un porte-charge (17b), dans lequel les étapes suivantes sont mises en oeuvre pour effectuer un échange de porte-charge (17a) au niveau d'un emplacement de mise à disposition (B) :
• lors d'une première étape, positionner la remorque de train de remorques (A) de manière à ce que la fourche de charge avant (15a) soit placée latéralement à côté de l'emplacement de mise à disposition (B) par le tracteur (Z) ;
• lors d'une deuxième étape, délivrer un ordre de commande du tracteur (Z) à la remorque de train de remorques (A) afin d'effectuer une opération de saisie au moyen de la fourche de charge avant (15a) ;
• lors d'une troisième étape, après que la fourche de charge avant (15a) chargée avec le porte-charge saisi (17a) a atteint la position de transport, positionner la remorque de train de remorques (A) de manière à ce que la fourche de charge arrière (15b) soit placée latéralement à côté de l'emplacement de mise à disposition (B) par le tracteur (Z), et
• lors d'une quatrième étape, délivrer un ordre de commande du tracteur (Z) à la remorque de train de remorques (A) pour effectuer une opération de dépôt au moyen de la fourche de charge arrière (15b).
